# EUROPÄISCHE PATENTSCHRIFT

(11) **EP 1 330 953 B1**
(45) Veröffentlichungstag und Bekanntmachung des Hinweises auf die Patenterteilung: **25.10.2006**
(21) Anmeldenummer: 02023638.6
(22) Anmeldetag: 21.10.2002
(51) Int. Cl.: A21B 1/26, A21B 1/40, F24C 3/12

(54) **Brennersystem mit mehreren Wärmeübertragungssystemen und Gargerät mit solch einem Brennersystem**
Burner system with multiple heat transfer systems and cooking device having such burner system
Système de brûleurs avec plusieurs systèmes de transfert de chaleur et appareil de cuisson pourvu d'un tel système de brûleurs

(30) Priorität: 25.01.2002 DE 20201184 U
(43) Veröffentlichungstag der Anmeldung: 30.07.2003
(73) Patentinhaber: Rational AG, 86899 Landsberg/Lech (DE)
(72) Erfinder: Wiedemann, Peter, 86836 Klosterlechfeld (DE); Koch, Franz, 86836 Untermeitingen (DE); Rusche, Stefan, Dr., 86854 Amberg (DE); Otminghaus, Rainer, 86899 Landsberg (DE); Lichtenstern, Manfred, 86947 Weil/Petzenhausen (DE)
(74) Vertreter: Weber-Bruls, Dorothée

(56) Entgegenhaltungen:
- DE-A- 2 644 839
- DE-A- 19 728 965
- DE-B- 1 022 534
- DE-C- 814 934
- DE-U- 20 201 184
- FR-A- 2 618 880
- US-A- 3 494 305
- US-A- 4 083 353
- US-A- 4 614 491
- US-A- 5 295 476
- US-A- 5 685 707
- PATENT ABSTRACTS OF JAPAN vol. 012, no. 055 (M-669), 19. Februar 1988 (1988-02-19) & JP 62 200114 A (WORLD SEIKI:KK), 3. September 1987 (1987-09-03)
- PATENT ABSTRACTS OF JAPAN vol. 008, no. 094 (M-293), 28. April 1984 (1984-04-28) & JP 59 007814 A (KIYUUHAN:KK), 17. Januar 1984 (1984-01-17)
- PATENT ABSTRACTS OF JAPAN vol. 009, no. 063 (M-365), 20. März 1985 (1985-03-20) & JP 59 197738 A (TOSHIO ISHII), 9. November 1984 (1984-11-09)

## Beschreibung

Die Erfindung betrifft ein Gargerät nach dem Oberbegriff von Anspruch 1.

Aus dem Stand der Technik sind Geräte zur thermischen Speisenzubereitung mittels Zuführung von Heißluft und/oder Dampf bekannt. In diesen sind in der Regel mehrere Wärmeerzeugereinrichtungen vorgesehen, die zur Erwärmung der Luft bzw. von Wasser zur Erzeugung von Dampf dienen.

Ein gattungsgemäßes Gargerät ist aus der US 4,817,582 bekannt. Diese Druckschrift offenbart einen Gaskombinationsofen, in dem Brennereinrichtungen zur Erzeugung von Dampf einerseits und zur Erwärmung eines Garraums andererseits vorhanden sind. Den in dem Ofen vorhandenen Brennern wird dabei über eine gemeinsame Gasversorgungsleitung Brenngas zugeführt. Eine Steuerung der Zufuhr des Brenngases zu den einzelnen Brennern geschieht über einzelne Steuerungsventile. Nachteilig bei den in diesem Ofen eingesetzten Brennern ist jedoch, daß eine hygienische Verbrennung nur in einem engen Leistungsbereich einstellbar ist, da es sich bei den in diesen Ofen verwendeten Brennern um atmosphärisch arbeitende Brenner handelt, bei denen die zugeführte Luftmenge im wesentlichen durch die Geometrie der luft- bzw. gasführenden Teile vorgegeben ist. Die Einstellung einer konstanten Luftzahl zur Erreichung einer hygienischen Verbrennung ist bei diesen Brennern nur in einem sehr engen Leistungsbereich möglich.

Ferner sind aus der US 5,975,072 Fluidflußventile und ein Gargerätkontrollsystem, welche solche Ventile nutzt, bekannt. Das Gargerätkontrollsystem dient dazu, Gasbrennern über ein Versorgungsleitungssystem Brenngas zuzuführen. Dabei sind die Fluidflußventile so ausgeführt, daß über eine mit ihnen in Verbindung stehende Steuerungseinheit zwei verschiedene Brenngasdurchflußraten ermöglicht werden. Die Gasbrenner sind jedoch Bestandteil eines einzelnen Wärmeerzeugersystems und dienen zur Erwärmung einer Garfläche. Bei den offenbarten Brennern handelt es sich ebenfalls um atmosphärische arbeitende Brenner.

Eine Wärmeerzeugereinrichtung innerhalb eines Gargeräts, welches mehrere Brenner umfaßt, ist weiterhin aus der EP 0 093 179 B1 bekannt. Bei dem dort offenbarten Gargerät wird in Abhängigkeit von gemessenen Temperaturzuständen über die Anzahl von in Betrieb befindlichen Brennern die Heizleistung schrittweise variiert. Dabei wird Gasbrennern, die zur Erwärmung von Luft, die einem Garraum zugeführt wird, dienen und somit zu einer Wärmeerzeugereinrichtung gehören, Gas über eine gemeinsame Gasversorgungsleitung zugeführt. Durch Einstellung der Gasvolumenströme zu den Brennern über Ventile soll eine genaue Steuerung der Temperatur innerhalb der Garvorrichtung ermöglicht werden.

Aus der US 4,083,353, der US 3,494,305 sowie der JP-A-59007814 ist jeweils ein Gargerät zum Aufheizen eines Garraums über eine Vielzahl von Brennern bekannt.

Die Beheizung eines einzelnen Wärmetauschers mit unterschiedlichen Heizleistungen durch Zu- und Abschalten verschiedener Brenner ist ferner aus der DE 39 27 416 A1 bekannt. Dieses Dokument offenbart einen Variationsbrenner für Gasfeuerungen in Zentralheizungskesseln. Drei Brennern, die jeweils eine unterschiedliche Nennleistung aufweisen können, wird über ein gemeinsames Gaszuleitungssystem mittels Ventilen gesteuert Brenngas zugeführt. Durch Zu- und Abschalten der Gaszufuhr zu den einzelnen Brennern wird die Wärmemenge variiert, die einer einzelnen Brennkammer eines Zentralheizungskessels über die Brenner zugeführt wird.

Eine weitere alternative Lösung, wie einem einzelnen Wärmetauscher, der in einem Schacht oberhalb eines Brenners angeordnet ist, unterschiedliche Heizleistungen zugeführt werden können, ist der DE 197 28 965 A1, die einen vormischenden Gasbrenner offenbart, zu entnehmen. Der Brenner ist in Form einer Brennerplatte ausgeführt, die mit einer Vielzahl von Ausströmöffnungen versehen ist. Über Stellorgane ist die Zufuhr eines Brenngasluftgemischs zu Auströmöffnungen bestimmter Bereiche der Brennerplatte je nach Wärmebedarf zu- bzw. abschaltbar.

In der JP-A-6220014 ist ein Gasrostofen mit nur einer Gaszufuhrleitung für zwei Brenner unter Einsatz zweier Gebläse beschrieben.

Die DE 197 22 822 A1 betrifft eine Einrichtung zur Bereitstellung von Energie für eine Zentralheizung und für eine Warmwasseraufbereitung. Die Einrichtung umfaßt zwei Brenner innerhalb eines gemeinsamen Gehäuses, die auf je eine unterschiedliche, wirkungsgradoptimale Nennwärmeleistung einstellbar sind. Diese Nennwärmeleistung entspricht jeweils der Durchschnittslast für einerseits die Warmwasseraufbereitung und andererseits die Zentralheizungsleistung. Die beiden Brenner wirken auf Wärmetauscher ein, die getrennte Kreisläufe für Warmwasser und Zentralheizungsenergie speisen. Diese Einrichtung weist jedoch eine vergleichsweise große Baugröße auf.

Aus der DE 690 01 128 T2 ist eine Gaskochmulde bekannt, die mehrere unter einer Glaskeramikplatte angeordnete Brennereinheiten umfaßt. Jede Brennereinheit weist eine Anzahl von konzentrischen Gasverbrennungsringen auf, wobei die Zufuhr eines Brenngasluftgemischs an die einzelnen Gasverbrennungsringe über Gasdurchflußregelventile steuerbar ist. Für jede einzelne der Brennereinheiten sind einzelne Flammenwächtervorrichtungen, Zeitsteuervorrichtungen sowie Thermostaten vorgesehen. Das Verschaltungs- und Luft- bzw. Gasfuhrsystem dieser Gaskochmulde ist jedoch vergleichsweise kompliziert und damit kostenintensiv.

Schließlich ist aus der EP 0 299 394 A1 eine Gasverbrennungsvorrichtung bekannt. Diese wird in einem Gasgargerät eingesetzt und umfaßt zwei zweiarmige atmosphärisch arbeitende Gasbrenner. Diese sind Bestandteil einer einzelnen Wärmeerzeugereinrichtungs zur Erwärmung der Atmosphäre innerhalb eines Garraums. In der Nähe jedes Arms eines Brenners ist jeweils ein Luftauslaß angeordnet, aus welchen durch ein Gebläse angetriebene Luft austritt.

Diese Luft wird dazu eingesetzt, die Flammenform des Brenners so zu verändern, daß eine gleichmäßige Erwärmung eines Garguts auch in einem breiten Garraum möglich wird. Die Gaszufuhr zu den einzelnen Brennerarmen erfolgt zwar über eine gemeinsame Zufuhrleitung, jedoch ist eine Regelung des Brenngasgemischstroms zu den einzelnen Brennerarmen und damit eine Regelung der von den einzelnen Brennerarmen erzeugten Wärmeleistung nicht vorgesehen.

Der vorliegenden Erfindung liegt daher die Aufgabe zugrunde, das gattungsgemäße Gargerät derart weiterzuentwickeln, daß die Nachteile des Stands der Technik überwunden werden. Insbesondere soll eine maximale Kompaktheit des Brennersystems erreicht werden und eine hygienische Verbrennung der Brenner innerhalb der einzelnen Wärmeerzeugereinrichtungen über einen weiten Leistungsbereich sichergestellt werden.

Diese Aufgabe wird durch die Merkmale des Kennzeichens von Anspruch 1 gelöst. Bevorzugte erfindungsgemäße Gargeräte sind in den Ansprüchen 2 bis 10 beschrieben.

Der Erfindung liegt somit die überraschende Erkenntnis zugrunde, daß ein Brennersystem innerhalb eines Gargerätes, das mehrere Wärmeerzeugereinrichtungen und Wärmeübertragungssysteme beispielsweise in Form von Wärmetauschern, insbesondere zur Erzeugung von Heißluft und/oder Dampf in einem Garraum, umfaßt, so ausgeführt werden kann, daß eine hygienische Verbrennung der Brenner innerhalb der einzelnen Wärmeerzeugereinrichtungen über einen weiten Leistungsbereich möglich ist und gleichzeitig durch die Zusammenführung verschiedener Volumenströme, wie Luftzufuhr- und/oder Verbrennungsgasströme, einzelne Bauteile, insbesondere vollständige Wärmeerzeugersysteme, innerhalb des Brennersystem eingespart werden können, was kostengünstig ist. Ferner ermöglicht die Beaufschlagung mehrerer Wärmetauscher mit der Wärme eines einzelnen Wärmeerzeugereinrichtung den Verzicht auf ansonsten vorhandene platzraubende und kostenintensive Wärmeerzeugereinrichtungen. Insbesondere durch den Einbau mehrerer Gasarmaturen, Kammern, Gebläse, Feuerungsautomaten und dergleichen bzw. die Verwendung jeweils eines Brenners für jedes Wärmeübertragungssystem liegt im Stand der Technik ein erhöhter Platzbedarf vor, welcher im Widerspruch zur allgemein gewünschten Reduzierung der Gerätebaugröße steht. Zudem besteht im Stand der Technik das technische Vorurteil, daß bei in verschiedenen Wärmeerzeugereinrichtungen innerhalb eines Gargeräts gebläseunterstützt arbeitenden Brennern ein erhöhter Konstruktions- und Kostenaufwand nötig sei. Ein solches Vorurteil besteht deshalb, weil bei gebläseunterstützt arbeitenden Brennern das Gebläse in einen Regelkreis eingebunden werden muß, um die gewünschte Luftdosierung zur Einstellung einer konstanten Luftzahl bei einer Modulation oder bei generell unterschiedlichen Leistungsanforderungen zu ermöglichen, weshalb in jedem Wärmeerzeugersystem jeweils Einzelkomponenten wie Armaturen und Feuerungsautomaten vorgesehen waren. All diese Vorurteile sind mit der Erfindung überwunden worden.

Weitere Merkmale und Vorteile der Erfindung ergeben sich aus der nachstehenden Beschreibung, in der bevorzugte Ausführungsformen der Erfindung beispielhaft anhand schematischer Zeichnungen im einzelnen erläutert sind. Dabei zeigt
- Figur 1: den schematischen Aufbau einer ersten Ausführungsform eines Brennersystems für ein erfindungsgemäßes Gargerät;
- Figur 2: den schematischen Aufbau einer zweiten Ausführungsform eines Brennersystems für ein erfindungsgemäßes Gargerät;
- Figur 3: den schematischen Aufbau eines alternativen Aufbaus der zweiten Ausführungsform eines Brennersystems für ein erfindungsgemäßes Gargerät;
- Figur 4: den schematischen Aufbau einer dritten Ausführungsform des Brennersystems für ein erfindungsgemäßes Gargerät; und
- Figur 5: den schematischen Aufbau eines erfindungsgemäßen Gargeräts, umfassend eine vierte Ausführungsform eines Brennersystems.

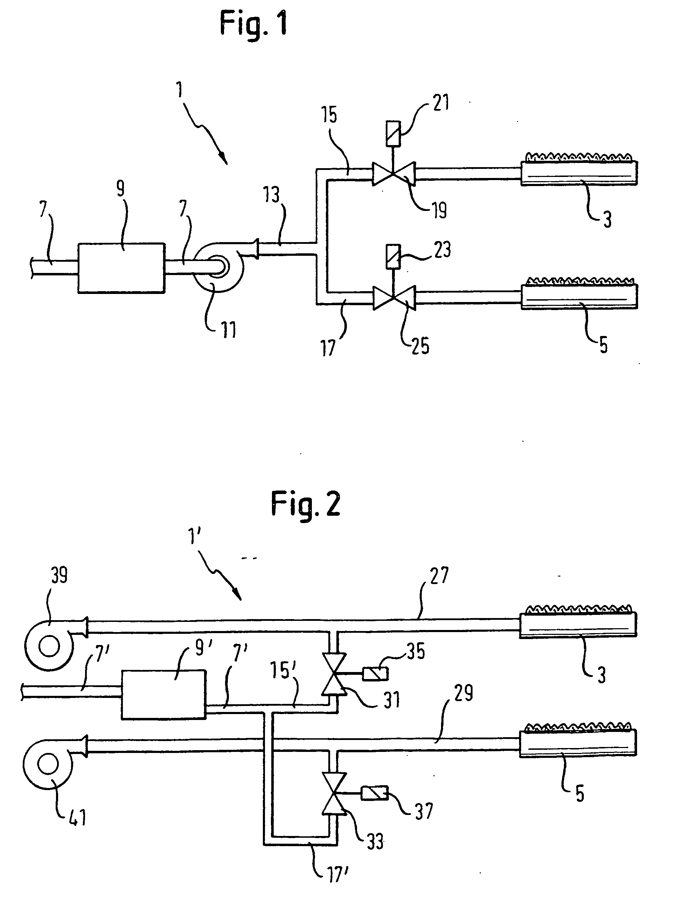

Das in Figur 1 dargestellte Brennersystem 1 umfaßt zwei Wärmeerzeuger-einrichtungen zur Erzeugung von Heißluft einerseits und Dampf andererseits über nicht dargestellte Wärmeübertragungssysteme, insbesondere in Form von jeweils mit den Wärmeerzeugereinrichtungen in Wirkverbindung stehenden Wärmetauschern. Von diesen Wärmeerzeugereinrichtungen sind übersichtigkeitshalber nur die Brenner 3 bzw. 5 dargestellt. Zur Überwachung der Brennerfunktion umfaßt jeder Brenner 3, 5 einen nicht dargestellten Sensor beispielsweise in Form eines Ionisationsstromsensors und jeweils eine nicht dargestellte Zündeinrichtung. Den Brennern 3, 5 wird Brenngas über eine erste Versorgungsleitung 7 unter Zwischenschaltung einer ersten Gasarmatur 9 zugeführt. Diese erste Gasarmatur 9 übernimmt die Funktion einer Druckregelung, Mengeneinstellung und Gasfilterung. Das Brenngas wird nach Durchlauf der ersten Gasarmatur 9 einem ersten luftzuführenden Gebläse 11 zugeführt. Durch das Gebläse 11 wird ein brennbares Brenngasluftgemisch erzeugt, das über eine zweite Versorgungsleitung 13, die sich in zwei zweite Versorgungsleitungen 15 und 17 aufteilt, den Brennern 3 und 5 zugeführt wird. In der einen zweiten Versorgungsleitung 15 ist ein Volumenfluß- bzw. Drucksteuerelement in Form eines Ventils 19, das über ein Stellglied 21 gesteuert wird, vorhanden. In analoger Weise befindet sich in der anderen zweiten Versorgungsleitung 17 ein über ein Stellglied 23 gesteuertes Ventil 25. Anstelle der Ventile 19 und 25 kann in einer alternativen, nicht dargestellten Ausführungsform vorgesehen sein, daß ein 3-Wege-Ventil im Bereich der Abzweigung der zweiten Versorgungsleitungen 15, 17 von der ersten Versorgungsleitung 13 vorgesehen ist. Es ist auch denkbar, daß die Ventile 19 und 25 durch Absperrelemente in Form von Magnetventilen ersetzt werden. Zur Einstellung der von den Brennern 3, 5 erzeugten Wärmeleistung sind die Gasarmatur 9, das Gebläse 11, die Stellglieder 21 und 23 sowie die Ionisationsstromsensoren und Zündeinrichtungen der Brenner 3, 5 mit einer nicht dargestellten Steuer- und/oder Regeleinheit, die die Funktion eines Feuerungsautomaten übernimmt, verbunden. Mittels des Feuerungsautomaten werden die Brenngas- bzw. Brenngasluftvolumenströme an die Wärmeanforderungen der Wärmererzeugereinrichtung angepaßt. Insbesondere ermöglicht es die Gasarmatur 9, die zugeführt Brenngasmenge einzustellen. Mittels der Einstellung der Drehzahl des Gebläses 11 kann die zugeführte Luftmenge eingestellt werden. Die den Brennern 3 bzw. 5 zugeführte Brenngasluftgemischmenge kann über die Ventile 19, 25 eingestellt werden. Dabei kann insbesondere eines der Ventile 19 bzw. 25 geschlossen werden, falls keine Wärmeanforderung für die entsprechende Wärmeerzeugereinrichtung vorliegt. Durch die erfindungsgemäße Zusammenlegung der Gas- und Luftvolumenströme wird in dem in Figur 1 dargestellten gebläseunterstützten Brennersystem 1 mindestens eine Gasarmatur, bspw. mit den Funktionen einer Druckregelung, Mengeneinstellung, Gasfilterung und/oder dergleichen, ein Feuerungsautomat sowie ein Gebläse eingespart.

Welche Fluidströmungen zusammengeführt werden können, richtet sich nach der Art des verwendeten Brenners. Bei vollvormischenden Brennern kann beispielsweise die Gemischzufuhr über eine gemeinsame Leitung erfolgen, die sich erst nach der Mischung teilt, wie in Figur 1 dargestellt. Dies kann sogar im Brenner selbst der Fall sein. Zu diesem Zweck muß der Brenner mit zwei oder mehreren benachbarten, aber räumlich getrennten Brennerkammern ausgeführt sein, und je nach Art des Wärmebedarfs schaltet die Zufuhr das Gasgemisch zur jeweiligen Brennerkammer. Bei zwei Brennerkammern kann dies beispielsweise über einen zylindrischen Brenner erfolgen, der zum einen in axialer und zum anderen in radialer Richtung brennt. Die Brenngasgemischumleitung kann über zwei mit Öffnungen versehene, koaxiale Becher erfolgen, die je nach Ausrichtung zueinander unterschiedliche Strömungsquerschnitte in die axiale oder eben in die radiale Richtung freigeben.

Bei dem in Figur 2 dargestellten Brennersystem 1' erfolgt die Brenngaszufuhr über eine erste Versorgungsleitung 7', in welcher eine einzige Gasarmatur 9' angeordnet ist. Die erste Versorgungsleitung 7' teilt sich in Strömungsrichtung des Brenngases in zwei zweite Versorgungsleitungen 15' und 17' auf. Diese zweiten Versorgungsleitungen 15' bzw. 17' führen das Brenngas zu zwei Luftzufuhrleitungen 27 bzw. 29, in welchen das Brenngas zur Erzeugung eines Brenngasluftgemisches jeweils in bekannter Weise über Düsen oder ähnliches einem über ein Gebläse 39 bzw. 41 angesaugten Luftvolumenstrom zugeführt wird. In den zweiten Versorgungsleitungen 15' bzw. 17' ist jeweils ein Ventile 31 bzw. 39, das über ein Stellglied 35 bzw. 37 gesteuert wird, angeordnet. Mittels der Ventile 31, 33 kann der dem jeweiligen Brenner 3 bzw. 5 zugeführte Brenngasvolumenstrom eingestellt werden. Da dieser Volumenstrom bedeutend geringer als ein Volumenstrom eines brennbaren Brenngasluftgemisches ist, sind die Nennweiten der Ventile 31 bzw. 33 geringer als die Nennweiten der in dem Brennersystem 1 eingesetzten Ventile 19 bzw. 25. Ferner sind die Nennweiten der zweiten Versorgungsleitungen 15' bzw. 17' des Brennersystems 1' von Figur 2 ebenfalls geringer als die Nennweiten der Versorgungsleitungen 15 bzw. 17 des Brennersystems 1 von Figur 1. Dadurch wird eine Kostenreduktion der betreffenden Bauteile erzielt. Die Regelung der den Brennern 3, 5 zugeführten Brenngasluftvolumenströme erfolgt über einen nicht dargestellten Feuerungsautomaten in analoger Weise wie bei dem in Figur 1 dargestellten Brennersystem 1. Eine Regelung der dem Brenner 3, 5 zugeführten Luftmenge erfolgt dabei über eine Regelung der Drehzahl der Gebläse 39, 41. Durch die Zusammenlegung der Brenngasströme zu den Brennern 3, 5 wird schließlich auch eine Gasarmatur eingespart.

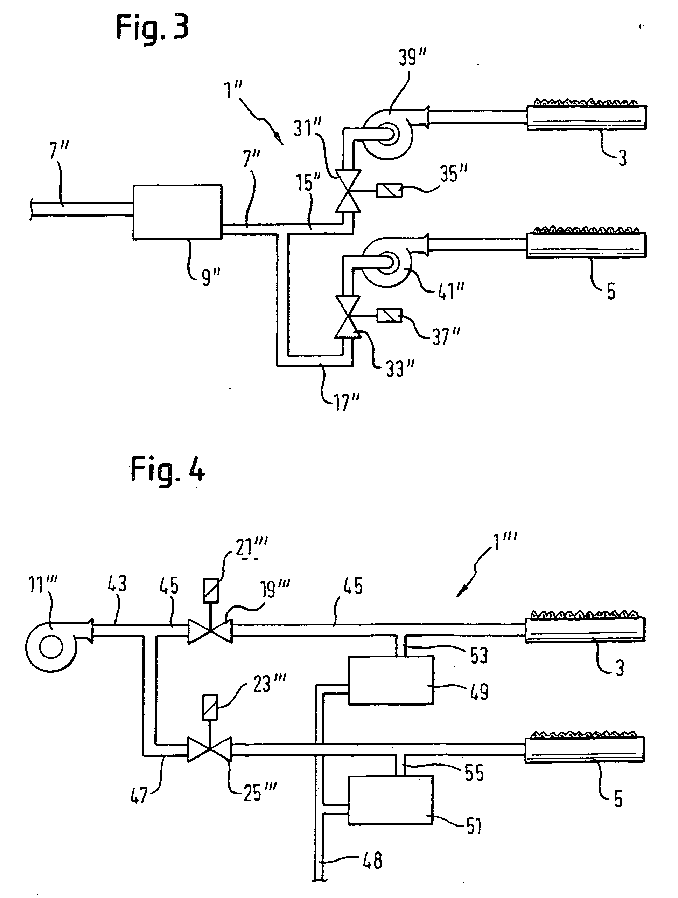

Eine zweite Gasarmatur ist ebenfalls in dem in Figur 3 dargestellten Brennersystem 1" überflüssig. In diesem Brennersystem 1" erfolgt die Brenngaszufuhr über eine erste Versorgungsleitung 7", in welcher eine Gasarmatur 9" angeordnet ist. Diese erste Versorgungsleitung 7" teilt sich in zwei zweite Versorgungsleitungen 15" und 17" auf. Die eine zweite Versorgungsleitung 15" führt über ein Ventil 31", das über ein Stellglied 35" angesteuert wird, und ein Gebläse 39" zu einem Brenner 3. In analoger Weise führt die andere zweite Versorgungsleitung 17" über ein Ventil 33", das über ein Stellglied 37" angesteuert wird, und ein Gebläse 41" zu einem Brenner 5. Eine Regelung der Wärmeleistung der Brenner 3, 5 erfolgt über einen nicht dargestellten Feuerungsautomaten durch Steuerung der Brenngasvolumenströme mittels der Gasarmatur 9" und der Ventile 31", 33", und die Regelung der den Brennern 3, 5 zugeführten Luftmenge erfolgt mittels Regelung der Drehzahl der Gebläse 39", 41".

Bei dem in Figur 3 dargestellten Brennersystem 1" kann durch die Verwendung zweier Gebläse der freizuschaltende Volumenstrom verringert werden, ebenso wie bei dem Brennersystem 1' gemäß Figur 2, wodurch sich die Nennweiten der Versorgungsleitungen und Armaturen verringern, also kostengünstige Bauteile eingesetzt werden können.

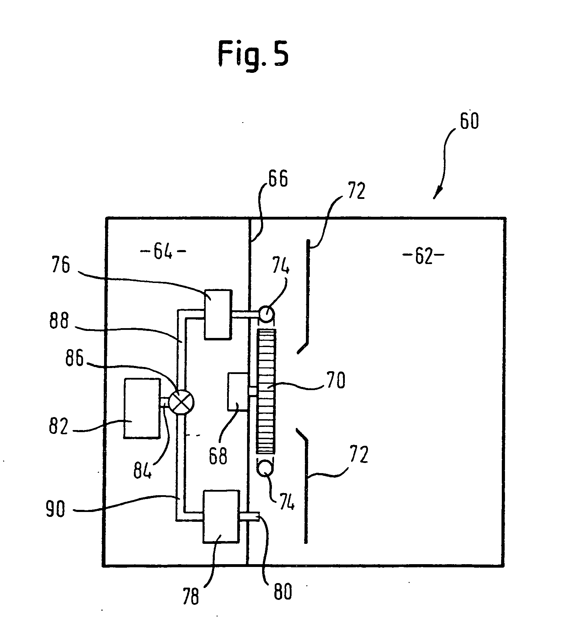

Bei dem in Figur 4 dargestellten Brennersystem 1"' erfolgt die Zufuhr von Verbrennungsluft zu zwei Brennern 3, 5 über ein Gebläse 11"' und eine erste Luftzufuhrleitung 43. Die erste Luftzufuhrleitung 43 spaltet sich in zwei zweite Luftzufuhrleitungen 45, 47 auf. In der einen zweiten Luftzufuhrleitung 45 ist ein Ventil 19", das über ein Stellglied 21' angetrieben wird, angeordnet. In Strömungsrichtung hinter dem Ventil 19" mündet eine zweite Versorgungsleitung 53 in die eine zweite Luftzufuhrleitung 45. Über die eine zweite Versorgungsleitung 53 wird mittels einer Gasarmatur 49 geregelt Brenngas von einer ersten Versorgungsleitung 48 zugeführt. In analoger Weise mündet in die andere zweite Luftzufuhrleitung 47 eine andere zweite Versorgungsleitung 55 hinter einem Ventil 25''', das über ein Stellglied 21"' gesteuert wird. Die Regelung der Brenngaszufuhr von der ersten Versorgungsleitung 48 durch die andere zweite Versorgungsleitung 55 erfolgt über eine Gasarmatur 51. Dadurch, daß die Brenngaszufuhr in Strömungsrichtung hinter dem Gebläse 11"' angeordnet ist, kann die Verbrennung sowohl voll- als auch teilvorgemischt erfolgen. Neben der Regelung der zugeführten Luftmenge kann durch die Ventile 19"', 25"' verhindert werden, daß es zu Auskühlverlusten durch Dauerdurchlüftung im Brennersystem kommt. Je nachdem, ob ein oder beide Brenner 3, 5 betrieben werden, wird die Drehzahl des Gebläses 11"' und damit die Gebläseleistung angepaßt. Auch wird die benötigte Ventilationsleistung reduziert.

Anstelle von Einzelventilen kann ein Mehrwegeventil verwendet werden. Diese Lösung hat neben der Reduktion der Gebläsezahl einen weiteren Vorteil, nämlich daß die Ventile ausschließlich die Luftvolumenströme freigeben und daher preisgünstiger als Ventile verbrennbare Gase sind, die besonderen sicherheitstechnischen Anforderungen unterliegen müssen.

In Figur 5 ist der schematische Aufbau eines erfindungsgemäßen Gargeräts 60, das ein erfindungsgemäßes Brennersystem umfaßt, dargestellt. Das Gargerät 60 umfaßt einen Garraum 62, der von einem Installationsraum 64 mittels einer Trennwand 66 abgetrennt ist. Innerhalb des Garraums 62 ist ein über einen Motor 68 angetriebenes Gebläserad 70 angeordnet. Das Gebläserad 70 dient zur Umwälzung einer in Garraum 62 vorhandenen Atmosphäre, wobei die Führung der Atmosphäre durch Luftleitbleche 72 erfolgt. Um das Gebläserad 70 sind Rohrleitungen 74 angeordnet, über die eine Erwärmung des mittels des Gebläserads 70 umgewälzten Atmosphäre erfolgt. Die Rohrleitungen 74 werden von einem Fluid druchströmt, das mittels eines Wärmetauschers 76 erwärmt wird. Somit dienen die Rohrleitungen 74 und der Wärmetauscher 76 zur Erzeugung von Heißluft innerhalb des Garraums 62. Ferner ist im Installationsraum 64 ein Dampferzeuger 78 angeordnet. Mittels einer Zuleitung 80 kann dem Garraum 62 vom Dampferzeuger 78 erzeugter Dampf zugeführt werden. Zur Erzeugung von Dampf umfaßt der Dampferzeuger 78 einen nicht dargestellten Wärmetauscher.

Darüber hinaus ist im Installationsraum 64 zumindest eine Wärmeerzeugereinrichtung in Form eines Gasbrenners 82 angeordnet. Der Gasbrenner 82 wird über in Figur 5 nicht dargestellte Versorgungsleitungen bzw. Bauteile in der anhand der Figuren 1 bis 4 beschriebenen Weise analog mit einem Brenngasluftgemisch versorgt. Die durch den Gasbrenner 82 erzeugten Verbrennungsgase werden über eine Verbrennungsgaszufuhrleitung 84 aus dem Gasbrenner 82 abgeführt. Die Verbrennungsgaszufuhrleitung 84 ist über ein Ventil in Form eines 3-Wege-Ventils 86 mit Verbrennungsgaszufuhrleitungen 88, 90 verbunden, die jeweils mit dem Wärmetauscher 76 bzw. 78 verbunden sind. Während der Durchführung eines Garprozesses in dem Gargerät 60 ermöglicht es das in der Figur 5 dargestellte Brennersystem, daß mittels eines einzelnen Brenners zumindest zwei Wärmetauscher mit Wärme beaufschlagt werden können. Insbesondere handelt es sich dabei einerseits um einen Wärmetauscher 76, der zur Erzeugung von Heißluft im Garraum 62 dient, und andererseits um einen Wärmetauscher in einem Dampferzeuger 78, der zur Zuführung von Dampf in den Garraum 62 dient.

Insbesondere während der Durchführung eines Dampfgarprozesses innerhalb des Garraums 62 werden durch das in der Figur 5 dargestellte Brennersystem verschiedene Vorteile erzielt. Einerseits ist der Platzbedarf des Brennersystems gering, so daß der Installationsraum 64 im Vergleich zu einem Brennersystem, bei dem jeder Wärmetauscher mit einem getrennten Brenner in Verbindung steht, deutlich verkleinert werden kann. Des Weiteren wird ein unnötiges Ein- und Ausschalten von Brennern, was zu einem schlechten Wirkungsgrad des Brennersystems führen könnte, vermieden. Beispielsweise bei der Durchführung eines Dampfgarprozesses wird während der Aufwärmphase nicht durchgehend Dampf erzeugt, sondern der Dampferzeuger zwischenzeitlich ausgeschaltet, damit die Feuchte innerhalb des Garraums 62 einen vorbestimmten Wert nicht übersteigt. Während der Aufwärmphase steigt jedoch die Temperatur der über den Wärmetauscher 76 und die Rohrleitungen 74 aufgewärmten Atmophäre weiter an, so daß die relative Feuchte in Garraum 62 abnimmt und der Dampferzeuger 78 erneut Dampf produzieren muß. Würde der Dampferzeuger 78 mittels eines eigenständigen Brenners mit Wärme versorgt, so würde dieser Brenner immer wieder ein- und ausgeschaltet. In dem in Figur 5 dargestellten Brennersystem wird dagegen die Wärmezufuhr zu den Wärmetauschern 76, 78 über das 3-Wege-Ventil 86 eingestellt. So wird zu Beginn eines Dampfgarporzesses das 3-Wege-Ventil 86 zunächst in eine derartige Position gestellt, daß sowohl der Wärmetauscher 76 als auch der im Dampferzeuger 78 vorhandene Wärmetauscher mit Verbrennungsgasen über die Verbrennungsgaszufuhrleitungen 84, 88, 90 versorgt werden. Ist eine weitere Dampferzeugung mittels des Dampferzeugers 78 nicht erwünscht, so wird das 3-Wege-Ventil 86 derart verstellt, daß nur noch der Wärmetauscher 76 über die Verbrennungaszufuhrleitungen 84, 88 mit Verbrennungsgasen des Gasbrenners 82 versorgt wird. Somit wird ein kontinuierlicher Betrieb des Gasbrenners 82 insbesondere auch dann ermöglicht, wenn eine Dampferzeugung aber keine weitere Aufwärmung der Atmosphäre innerhalb des Garraums 62 oder eine weitere Erwärmung der Atmosphäre innerhalb des Garraums 62 aber keine weitere Dampferzeugung erwünscht ist.

In Abweichung von der in Figur 5 dargestellten Ausführungsform des Brennersystems kann alternativ vorgesehen sein, daß die Wärmetauscher nicht parallel, wie in Figur 5 dargestellt, mit Wärme beaufschlagt werden, sondern sozusagen in Reihe geschaltet werden. So könnten die Verbrennungsgase zunächst beispielsweise einem Wärmetauscher eines Dampferzeugers zugeführt und anschließend die teilweise abgekühlten Verbrennungsgase einem Wärmetauscher beispielsweise innerhalb eines Garraums eines Gargeräts zugeführt werden, um eine Erwärmung der Garraumatmosphäre herbeizuführen.

In einer weiteren nicht dargestellten Ausführungsform kann auch vorgesehen sein, daß die Beaufschlagung der einzelnen Wärmetauscher mit Verbrennungsgasen nicht über ein Ventil erfolgt, sondern durch den Aufbau des Gasbrenners selber ermöglicht wird. Insbesondere der zuvor beschriebene Aufbau eines Brenners mit zwei Brennkammern, die vorzugsweise in axialer und radialer Richtung zu einem zylindrischen Brenner angeordnet sind, ermöglicht eine derartige Verteilung der Brennungsgase auf die einzelnen Wärmetauscher.

Die in der vorstehenden Beschreibung, in den Zeichnungen sowie in den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Gargerät mit einem Brennersystem, das zumindest zwei Wärmeübertragungssysteme umfaßt, und mit einem Garraum, dem mittels zumindest eines der Wärmeübertragungssysteme Heißluft zuführbar und/oder in dem Garraumathmosphäre erwärmbar und dem mittels eines anderen Wärmeübertragungssystems erzeugter Dampf zuführbar ist, zur Durchführung eines Garprozesses mit Heißluft und/oder Dampf, wobei die Wärmeübertragungssysteme mit zumindest einer Wärmeerzeugereinrichtung, die zumindest einen mit einem brennbaren Fluid, insbesondere einem Brenngasluftgemisch, betriebenen Brenner und Versorgungseinrichtungen zum Zuführen des Fluids bzw. der Fluide zu dem bzw. den Brenner(n), die zumindest teilweise von mehreren Brennern gemeinsam nutzbar sind, umfaßt, in Wirkverbindung stehen, und
jeder Brenner (3, 5) zur Steuerung und/oder Regelung der Luftzahl des dem Brenner (3, 5) zugeführten Brenngasluftgemischs gebläseunterstützt teil- oder vollvormischend arbeitet, **dadurch gekennzeichnet, daß**
das zumindest eine Wärmeübertragungssystem zum Zuführen von Heißluft zu dem Garraum (62) und/oder Erwärmen von Garraumatmosphäre einen Wärmetauscher (76) in Verbindung mit um ein Gebläserad (70) angeordneten Rohrleitungen (74) aufweist,
das andere Wärmeübertragungssystem zum Zuführen von Dampf in den Garraum (12) einen Dampferzeuger (78) und eine Zuleitung (80) aufweist, und
entweder die Versorgungseinrichtungen (7-55) von zumindest zwei Brennern (3, 5) nur eine Gasarmatur (9, 9', 9'') für Brenngas und/oder nur ein Gebläse (11, 11''') für Luft aufweisen, oder zumindest zwei Wärmeübertragungssysteme (76, 78) mit von nur einem Brenner (82) erzeugter Wärme durch Zufuhr von Verbrennungsgasen beaufschlagbar sind, wobei
i) bei nur einer Gasarmatur (9) und nur einem Gebläse (11) den zumindest zwei Wärmeerzeugereinrichtungen über die Gasarmatur (9) in einer ersten Versorgungsleitung (7) für Brenngas, die sich in zwei zweite Versorgungsleitungen (15, 17) für Brenngas oder Brenngasluftgemisch stromabwärts oder stromaufwärts des Gebläses (11) aufteilt, gesteuert und/oder geregelt Brenngasluftgemisch zuführbar ist, oder
ii) bei nur einer Gasarmatur (9', 9") den zumindest zwei Wärmeerzeugereinrichtungen über die Gasarmatur ( 9', 9") in einer ersten Versorgungsleitung (7', 7") für Brenngas, die sich in zwei zweite Versorgungsleitungen (15', 15", 17', 17") aufteilt stromaufwärts zweier Gebläse (39", 41") oder in zwei erste Luftzufuhrleitungen (27, 29) stromabwärts zweier Gebläse (39, 41) mündend, gesteuert und/oder geregelt Brenngasluftgemisch zuführbar ist, oder
iii) bei nur einem Gebläse (11''') den zumindest zwei Wärmeerzeugereinrichtungen über das Gebläse (11''') an einer ersten Luftzufuhrleitung (43), die sich in zwei zweite Luftzufuhrleitungen (45, 47) aufteilt, in die jeweils eine zweite Versorgungsleitung (53, 55) für Brenngas stromabwärts einer Gasarmatur (49, 51) mündet, gesteuert und/oder geregelt Brenngasluftgemisch zuführbar ist, oder
iv) bei nur einem Brenner (82) zumindest eine mit dem Brenner (82) und den Wärmeübertragungssystemen (74, 76, 78, 80) in Wirkverbindung stehende erste Verbrennungsgaszufuhrleitung (84) sich in zwei zweite Verbrennungsgaszufuhrleitungen (88, 90) aufteilt.

2. Gargerät nach Anspruch 1, **dadurch gekennzeichnet, daß**
die Aufteilung der ersten Verbrennungsgaszufuhrleitung (84) in zwei zweite Verbrennungsgaszufuhrleitungen (88, 90) bei nur einem Brenner (82) eine Zwischenanordnung eines Volumenfluß- und/oder Drucksteuerelements, insbesondere in Form eines 3-Wege-Ventils, vorzugsweise mit Stellglied, nutzt.

3. Gargerät nach Anspruch 2, **gekennzeichnet durch**
zumindest eine Fördereinrichtung, vorzugsweise in Form eines Gebläses, insbesondere in Wirkverbindung mit der ersten und/oder zumindest einer zweiten Verbrennungsgaszufuhrleitung.

4. Gargerät nach einem der vorangehenden Ansprüche, **dadurch gekennzeichnet, daß** zumindest ein Brenner, vorzugsweise alle Brenner, in Wirkverbindung mit zumindest einem Feuerungsautomaten zur Funktions- und Ablaufssteuerung des zumindest einen Brenners bringbar ist.

5. Gargerät nach Anspruch 4, **dadurch gekennzeichnet, daß**
der Feuerungsautomat mit zumindest einem Sensor, vorzugsweise in Form eines Ionisationsstromsensors zur Überwachung der Funktion zumindest eines Brenners, und/oder mit einer Zündeinrichtung zumindest eines Brenners in Wirkverbindung steht.

6. Gargerät nach einem der vorangehenden Ansprüche, **gekennzeichnet durch**
zumindest ein Volumenfluß- und/oder Drucksteuerelement zur Steuerung und/oder Regelung der Zufuhr des Brenngasluftgemisches an zumindest einen Brenner (3, 5, 82), vorzugsweise in Form eines in einer ersten und/oder zweiten Versorgungsleitung (15, 15', 15'', 17, 17', 17''), einer ersten und/oder zweiten Luftzufuhrleitung (45, 47) und/oder eines ersten und/oder zweiten Verbrennungsgaszufuhrleitung (84, 88, 90) anordbaren Ventils (19, 19"', 25, 25''', 31, 31", 33, 33"), insbesondere mit Stellglied (21, 21''', 23, 23"', 35, 35", 37, 37"), oder eines im Bereich der Abzweigung einer ersten Versorgungsleitung in zwei zweite Versorgungsleitungen und/oder einer ersten Luftzufuhrleitung in zwei zweite Luftzufuhrleitungen angeordneten 3-Wege-Ventils (86).

7. Gargerät nach einem der vorangehenden Ansprüche, **gekennzeichnet durch**
zumindest eine Steuer- und/oder Regeleinheit in Wirkverbindung mit zumindest einem Brenner, zumindest einem Feuerungsautomaten, zumindest einer Gasarmatur, zumindest einem Gebläse, zumindest einer Fördereinrichtung, zumindest einem Volumenfluß- und/oder Drucksteuerelement, zumindest einer Zündeinrichtung und/oder zumindest einem Sensor.

8. Gargerät nach einem der vorangehenden Ansprüche, **dadurch gekennzeichnet, daß**
der Brenner eine Brenneranordnung mit zumindest zwei räumlich voneinander getrennten Brennerkammern aufweist, wobei vorzugsweise jede Brennerkammer mit zumindest einem Wärmeübertragungssystem in Wirkverbindung steht.

9. Gargerät nach Anspruch 8, **dadurch gekennzeichnet, daß**
die Wärmekopplung aus den Brennerkammern in zueinander im wesentlichen senkrechten Richtungen erfolgt.

10. Gargerät nach Anspruch 8 oder 9, **dadurch gekennzeichnet, daß**
die Brenneranordnung im wesentlichen zylinderförmig ist, und die Wärmeauskopplung parallel und senkrecht zur Zylinderachse der Brenneranordnung erfolgt.

## Claims

1. Cooking appliance having a burner system, which comprises at least two heat transfer systems, and having a cooking space, to which hot air can be fed by means of at least one of the heat transfer systems and/or in which cooking space atmosphere can be heated and to which steam generated by means of another heat transfer system can be fed, for carrying out a cooking process using hot air and/or steam, wherein the heat transfer systems are operatively connected to at least one heat generator device, which comprises at least one burner operated with a combustible fluid, in particular a fuel gas/air mixture, and supply devices for feeding the fluid(s) to the burner(s), which in at least some cases can be used by a plurality of burners jointly, and
each burner (3, 5), in order to control the air/fuel ratio of the fuel gas/air mixture fed to the burner (3, 5), works in fan-assisted partly or fully premixing mode, **characterized in that**
the at least one heat transfer system for feeding hot air to the cooking space (62) and/or heating cooking space atmosphere has a heat exchanger (76) connected to pipelines (74) arranged around a fan wheel (70),
the other heat transfer system for feeding steam into the cooking space (12) has a steam generator (78) and a feed line (80), and
either the supply devices (7-55) of at least two burners (3, 5) have just one gas fitting (9, 9', 9") for fuel gas and/or just one fan (11, 11"') for air, or at least two heat transfer systems (76, 78) can be acted on by heat generated by just one burner (82) as a result of the combustion gas feed, wherein
i) if there is just one gas fitting (9) and just one blower (11), fuel gas/air mix can be fed in a controlled manner to the at least two heat generator devices via the gas fitting (9) in a first supply line (7) for fuel gas, which splits into two second supply lines (15, 17) for fuel gas or fuel gas/air mixture downstream or upstream of the fan (11), or
ii) if there is just one gas fitting (9', 9''), fuel gas/air mixture can be fed in a controlled manner to the at least two heat generator devices via the gas fitting (9', 9") in a first supply line (7', 7") for fuel gas, which divide into two second supply lines (15', 15'', 17', 17'') upstream of two fans (39'', 41'') or opening out into two first air feed lines (27, 29) downstream of two fans (39, 41), or
iii) if there is only one fan (11'''), fuel gas/air mixture can be fed in a controlled manner to the at least two heat generator devices via the fan (11''') at a first air feed line (43), which divides into two second air feed lines (45, 47), into each of which a second supply line (53, 55) for fuel gas opens out downstream of a gas fitting (49, 51), or
iv) if there is only one burner (82), at least one first combustion gas feed line (84), which is operatively connected to the burner (82) and the heat transfer systems (74, 76, 78, 80), divides into two second combustion gas feed lines (88, 90).

2. Cooking appliance according to Claim 1, **characterized in that** the division of the first combustion gas feed line (84) into two second combustion gas feed lines (88, 90) if there is only one burner (82) makes use of an intermediate arrangement of a volumetric flow and/or pressure control element, in particular in the form of a 3-port directional control valve, preferably with actuator.

3. Cooking appliance according to Claim 2, **characterized by** at least one delivery device, preferably in the form of a fan, in particular operatively connected to the first and/or at least one second combustion gas feed line.

4. Cooking appliance according to one of the preceding claims, **characterized in that** at least one burner, preferably all the burners, can be operatively connected to at least one automated firing unit for controlling the function and sequence of the at least one burner.

5. Cooking appliance according to Claim 4, **characterized in that** the automated firing unit is operatively connected to at least one sensor, preferably in the form of an ionization current sensor for monitoring the function of at least one burner, and/or to an ignition device of at least one burner.

6. Cooking appliance according to one of the preceding claims, **characterized by** at least one volumetric flow and/or pressure control element for controlling the supply of the fuel gas/air mixture to at least one burner (3, 5, 82), preferably in the form of a valve (19, 19''', 25, 25''', 31, 31'', 33, 33''), which can be arranged in a first and/or second supply line (15, 15', 15", 17, 17', 17''), in a first and/or second air feed line (45, 47) and/or in a first and/or second combustion gas feed line (84, 88, 90) and in particular has an actuator (21, 21''', 23, 23''', 35, 35", 37, 37''), or in the form of a 3-port directional control valve (86), which is arranged in the region where a first supply line branches into two second supply lines and/or a first air feed line branches into two second air feed lines.

7. Cooking appliance according to one of the preceding claims, **characterized by** at least one control unit which is operatively connected to at least one burner, at least one automated firing unit, at least one gas fitting, at least one fan, at least one delivery device, at least one volumetric flow and/or pressure control element, at least one ignition device and/or at least one sensor.

8. Cooking appliance according to one of the preceding claims, **characterized in that** the burner has a burner arrangement comprising at least two burner chambers that are spatially separate from one another, each burner chamber preferably being operatively connected to at least one heat transfer system.

9. Cooking appliance according to Claim 8, **characterized in that** the coupling of heat out of the burner chambers takes place in directions that are substantially perpendicular to one another.

10. Cooking appliance according to Claim 8 or 9, **characterized in that** the burner arrangement is substantially cylindrical, and the discharge of heat takes place parallel and perpendicular to the cylinder axis of the burner arrangement.

## Revendications

1. Appareil de cuisson avec un système de brûleurs, comprenant au moins deux systèmes de transfert de chaleur, et avec une enceinte de cuisson, à laquelle, au moyen d'au moins l'un des systèmes de transfert de chaleur, peut être amené de l'air chaud et/ou dans laquelle une atmosphère d'enceinte de cuisson peut être chauffée, et à laquelle peut être amenée de la vapeur, produite au moyen d'un autre système de transfert de chaleur, pour accomplir un processus de cuisson, à l'air chaud et/ou à la vapeur, sachant que les systèmes de transfert de chaleur sont reliés fonctionnellement à au moins un dispositif de génération de chaleur, comprenant au moins un brûleur, fonctionnant avec un fluide combustible, en particulier un mélange air-gaz combustible, et des dispositifs d'alimentation, pour amener le fluide ou les fluides au (x) un ou plusieurs brûleur(s), susceptibles d'être utilisés conjointement au moins partiellement par plusieurs brûleurs et
chaque brûleur (3, 5) travaille, en procédant à un prémélange partiel ou complet, assisté par soufflante, pour la commande et/ou la régulation de l'indice d'air du mélange air-gaz combustible amené au brûleur (3, 5), **caractérisé en ce que**
le au moins un système de transfert de chaleur présente, pour l'amenée d'air chaud à l'enceinte de cuisson (62) et/ou pour le chauffage de l'atmosphère d'enceinte de cuisson, un échangeur de chaleur (76) relié à des tuyauteries (74) disposées autour d'une route soufflante (70), l'autre système de transfert de chaleur présente un générateur de vapeur (78) et une conduite d'alimentation (80), pour l'amenée de vapeur dans l'enceinte de cuisson (12), et
soit les dispositifs d'alimentation (7 à 55) d'au moins deux brûleurs (3, 5) présentent uniquement une robinetterie de gaz (9, 9', 9") pour du gaz combustible et/ou uniquement une soufflante (11, 11"') pour l'air, soit au moins deux systèmes de transfert de chaleur (76, 78) sont susceptibles être sollicités avec la chaleur, générée uniquement par un brûleur (82), par amenée de gaz de combustion, où
i) dans le cas où l'on a une seule robinetterie de gaz (9) et une seule soufflante (11), on peut amener un mélange air-gaz combustible aux au moins deux dispositifs de génération de chaleur, de façon commandée et/ou régulée, par l'intermédiaire de la robinetterie de gaz (9) disposée dans une première conduite d'alimentation (7) pour du gaz combustible, se subdivisant, en aval ou en amont de la soufflante (11), en deux deuxièmes tuyauteries d'alimentation (15, 17) pour du gaz combustible et/ou un mélange air-gaz combustible, ou
ii) dans le cas où l'on a une seule robinetterie de gaz (9', 9"), on peut amener un mélange air-gaz combustible aux au moins deux dispositifs de génération de chaleur, de façon commandée et/ou régulée, par l'intermédiaire de la robinetterie de gaz (9', 9") disposée dans une première conduite d'alimentation (7', 7") pour du gaz combustible, qui se subdivise, en amont de deux soufflantes (39", 41"), en deux deuxièmes tuyauteries d'alimentation (15', 15", 17', 17"), ou en débouchant en deux premières tuyauteries d'alimentation en air (27, 29), en aval de deux soufflantes (39, 41), ou
iii) dans le cas où l'on a une seule soufflante (11'''), on peut amener un mélange air-gaz combustible aux au moins deux dispositifs de génération de chaleur, de façon commandée et/ou régulée, par la soufflante (11"'), à une première conduite d'alimentation en air (43), qui se subdivise en deux deuxièmes conduites d'alimentation en air (45, 47), dans chacune lesquelles débouche une deuxième conduite d'alimentation (53, 55) pour du gaz combustible, en aval d'une robinetterie de gaz (49, 51), ou
iv) dans le cas où l'on a un seul brûleur (82), au moins une première conduite d'alimentation en gaz de combustion (84), reliée fonctionnement au brûleur (82) et aux système de transfert de chaleur (74, 76, 78, 80), se subdivise en deux deuxièmes conduites d'alimentation en gaz de combustion (88, 90).

2. Appareil de cuisson selon la revendication 1, **caractérisé en ce que**
la subdivision de la première conduite alimentation en gaz combustible (84) en deux deuxièmes conduites alimentation en gaz de combustion (88, 90), lorsqu'on a un seul brûleur (82), utilise un agencement intermédiaire d'un élément de commande de débit volume et/ou de pression, en particulier, ayant la forme d'une soupape à 3 voies, de préférence avec un organe de réglage.

3. Appareil de cuisson selon la revendication 2, **caractérisé par**
au moins un dispositif de transfert, de préférence réalisé sous la forme d'une soufflante, en particulier relié fonctionnellement à la première et/ou à au moins une deuxième conduite alimentation en gaz de combustion.

4. Appareil de cuisson selon l'une des revendications précédentes, **caractérisé en ce qu'**au moins un brûleur, de préférence tous les brûleurs, sont susceptibles d'être reliés fonctionnellement à au moins un robot de combustion, pour la commande fonctionnelle et de déroulement du au moins un brûleur.

5. Appareil de cuisson selon la revendication 4, **caractérisé en ce que** le robot de combustion est relié fonctionnellement à au moins un capteur, de préférence réalisé sous la forme d'un capteur à courant d'ionisation, afin de surveiller le fonctionnement au moins d'un brûleur et/ou est relié fonctionnellement à un dispositif d'allumage d'au moins un brûleur

6. Appareil de cuisson selon l'une des revendications précédentes, **caractérisé par** au moins un élément de commande du débit volume et/ou de pression, pour la commande et/ou la régulation de l'alimentation en mélange air-gaz combustible à au moins un brûleur (3, 5, 82), de préférence sous la forme d'une soupape (19, 19"', 25, 25"', 31, 31", 33, 33") susceptible d'être disposée dans une première et/ou une deuxième conduite d'alimentation (15, 15', 15", 17, 17', 17"), une première et/ou une deuxième conduite d'alimentation en air (45, 47) et/ou une première et/ou une deuxième conduite d'alimentation en gaz de combustion (84, 88, 90), en particulier avec un organe de réglage (21, 21"', 23, 23"', 35, 35", 37, 37"), ou une soupape à 3 voies (86), disposée dans la zone de la ramification d'une première conduite d'alimentation en deux deuxièmes conduites d'alimentation, et/ou d'une première conduite alimentation en air en deux deuxièmes conduites d'alimentation en air.

7. Appareil de cuisson selon l'une des revendications précédentes, **caractérisé par** au moins une unité de commande et/ou de régulation, reliée fonctionnellement à au moins un brûleur, à au moins un robot de combustion, à au moins une robinetterie de gaz, à au moins une soufflante, à au moins un dispositif de transfert, à au moins un élément de commande de débit volume et/ou de pression, à au moins un dispositif d'allumage et/ou à au moins un capteur.

8. Appareil de cuisson selon l'une des revendications précédentes, **caractérisé en ce que** le brûleur présente un agencement de brûleurs, comprenant au moins deux chambres de brûleur séparées spatialement l'une de l'autre, de préférence chaque chambre de brûleur étant reliée fonctionnellement à au moins un système de transfert de chaleur.

9. Appareil de cuisson selon la revendication 8, **caractérisé en ce que** le couplage thermique à partir des chambres de brûleur se fait dans des directions sensiblement mutuellement perpendiculaires.

10. Appareil de cuisson selon la revendication 8 ou 9, **caractérisé en ce que** l'agencement à brûleurs est sensiblement de forme cylindrique et le découplage thermique se fait parallèlement et perpendiculairement à l'axe de cylindre de l'agencement à brûleurs.
